# EUROPEAN PATENT SPECIFICATION

(11) **EP 4 650 192 B1**
(45) Date of publication and mention of the grant of the patent: **24.06.2026**
(21) Application number: 25175580.7
(22) Date of filing: 12.05.2025
(51) Int. Cl.: B60D 1/06, B60R 9/10

(54) **LEVER BALL-CLAMPING APPARATUS WITH ADJUSTABLE TIGHTNESS**
KUGELSPANNVORRICHTUNG MIT EINSTELLBARER DICHTHEIT
DISPOSITIF DE SERRAGE À LEVIER À ÉTANCHÉITÉ RÉGLABLE

(30) Priority: 12.05.2024 CN 202421021234 U
(43) Date of publication of application: 19.11.2025
(73) Proprietor: Wode Global (Qingdao) Outdoor Co., Ltd., Qingdao City Shandong Province (CN)
(72) Inventor: ZHAO, Yingchun, Qingdao City (CN)
(74) Representative: Office Freylinger

(56) References cited:
- EP-A1- 2 163 432
- EP-A1- 3 772 434
- CN-U- 218 287 342
- DE-B3- 102007 026 375
- FR-A1- 2 974 326

## Description

### Technical field

The present invention relates to the technical field of lever ball-clamping, and in particular, to a lever ball-clamping apparatus with adjustable tightness.

### Technical background

During connection and clamping of a trailer ball, the trailer ball is generally clamped by using a clamping seat, thereby achieving a purpose of connecting to a vehicle frame. However, most existing clamping seats adopt compression-based clamping or rotation-based clamping, both of which achieve fixing and clamping of the trailer ball by a driving force. In the prior art, in order to improve tightness of clamping and reduce an applying force for the clamping, a clamping assembly of a lever structure is generally designed, and a purpose of labor saving is achieved by rotating a long arm of a lever.

However, during actual clamping action, existing lever clamping assemblies all achieve a purpose of clamping by rotating the long arm to drive the other side to fall. The lever is a structure directly connected to the clamping seat, so a clamping stroke length thereof is fixed, and the handle is required to be lifted to drive the other side to fall to achieve the purpose of clamping. However, during the operation, pressing the handle down is more in line with force application habits. The document EP 3 772 434 A1 discloses a lever ball-clamping apparatus known in the prior art.

### Summary of the invention

An objective of the present invention is to provide a lever ball-clamping apparatus with adjustable tightness, to solve the problem raised in the Technical Background above. To achieve the above objective, the present invention provides a lever ball-clamping apparatus with adjustable tightness according to independent claim 1. Some advantageous or preferred embodiments are described in the dependent claims.

Specifically, a lever ball-clamping apparatus with adjustable tightness is proposed herein, including a lever ball-clamping assembly, the lever ball-clamping assembly including a housing and a handle, an upper end of the housing being provided with a top support plate, the housing being fixedly provided with a ball-clamping support base therein, the upper end of the housing being mounted with a ball-clamping press seat in a liftable manner, and the ball-clamping press seat being connected to the handle via a linkage assembly;
wherein an open socket accommodating lateral insertion mounting of a trailer ball is arranged on one lateral side of the housing and the ball-clamping support base, and the linkage assembly includes a lever pressing body, a threaded adjustment piece, and a ball-clamping link rod, two ends of the ball-clamping link rod being respectively pivotably connected to the ball-clamping press seat and the lever pressing body, the lever pressing body being provided with an oblong hole, the threaded adjustment piece being mounted in an inner cavity of the lever pressing body through a first bolt inserted in the oblong hole, the lever pressing body being rotatably mounted on the top support plate through the first bolt, an upper end of the threaded adjustment piece being provided with a screw rod sliding through an upper end of the lever pressing body, the screw rod being provided with an adjusting nut pressed on an outer wall of the upper end of the lever pressing body, and the other side of the lever pressing body being connected to the handle.

Preferably, upper and lower ends of the ball-clamping link rod are respectively provided with a second bolt and a third bolt, the upper end of the ball-clamping link rod is pivotably connected to a lower end of the lever pressing body through the second bolt, and the lower end of the ball-clamping link rod is pivotably connected to an upper end of the ball-clamping press seat through the third bolt.

Preferably, a side of the housing away from the open socket is provided with a connecting frame fitting a vehicle frame.

Preferably, a blocking latch is slidably mounted at a lower end of a side of the handle close to the lever pressing body, and an outer wall of the top support plate is provided with a blocking recess in insertion fitting with the blocking latch.

Preferably, one side of the blocking latch is fixedly connected with a pull plate, the pull plate being slidably mounted on the handle, and the handle is provided with an elongated adjustment slot fitting sliding of the blocking latch and the pull plate.

Preferably, an upper end of the pull plate is provided with a lock catch, and the handle is provided with a locking assembly fitting the lock catch.

Compared with the prior art, the prevent invention achieves the following beneficial effects.

In the present invention, by adding the ball-clamping link rod and the threaded adjustment piece cooperating with each other to an existing lever clamping assembly, a force direction is changed, so that the handle is lowered to apply a force to drive the ball-clamping press seat to fall to achieve a purpose of clamping, which is more in line with force application habits during operation. At the same time, the oblong hole is provided to cooperate with the adjusting nut to make changes in the relative position of the lever pressing body and the threaded adjustment piece, so as to adjust a stroke length of a ball-clamping press seat and a tightness level of the clamped trailer ball, which is suitable for the problem of loosening of clamping of the trailer ball caused by a change in a size due to wear and tolerance.

### Brief description of the drawings

Fig.1 is an exploded view of a lever ball-clamping apparatus according to an embodiment of the present invention;
Fig.2 is a schematic view of a three-dimensional structure in the embodiment shown in Fig.1 according to the present invention;
Fig.3 is a schematic view of a three-dimensional structure of mounting of a linkage assembly on a top support plate according to the present invention;
Fig.4 is a schematic view of a three-dimensional structure of assembly of the linkage assembly according to the present invention;
Fig.5 is a schematic structural view of a clamped state of a trailer ball according to the present invention;
Fig.6 is an exploded view of the lever ball-clamping apparatus according to another embodiment of the present invention;
Fig.7 is a schematic view of a three-dimensional structure in the embodiment shown in Fig.6 according to the present invention; and
Fig.8 is a schematic view of overall assembly of the lever ball-clamping apparatus in the embodiment shown in Fig.6 according to the present invention.

Reference signs in the figures: 1: handle; 2: housing; 3: top support plate; 4: lever pressing body; 5: blocking recess; 6: threaded adjustment piece; 7: ball-clamping link rod; 8: ball-clamping press seat; 9: ball-clamping support base; 10: trailer ball; 11: first bolt; 12: oblong hole; 13: blocking latch; 14: locking assembly; 15: pull plate; 16: lock catch; 17: adjusting nut; 18: second bolt; 19: third bolt; 20: connecting frame; 21: elongated adjustment slot; 22: open socket.

### Detailed description of the embodiments

The technical solutions according to the embodiments of the present invention will be described clearly and completely below with reference to the accompanying drawings in the embodiments of the present invention. Apparently, the described embodiments are merely some of rather than all of the embodiments of the present invention.

The terms "first", "second", "third", and so on used in the specification, the claims, and the accompanying drawings of the present invention are used to distinguish different objects rather than describe specific sequences. Additionally, the terms "include/comprise", "have", and any variations thereof are intended to cover a non-exclusive inclusion.

Those skilled in the art should understand that in the description of the specification and the claims of the present application, the orientation or position relationships indicated by the terms "longitudinal", "transverse" or "lateral", "upper", "lower", "front", "back", "left", "right", "vertical", "horizontal", "top", "bottom", "inner", "outer", etc. are based on the orientation or position relationships shown in the accompanying drawings and are intended to facilitate the description of the present invention and simplify the description only, rather than indicating or implying that the apparatus, mechanism, structure, or element referred to must have a particular orientation or be constructed and operated in a particular orientation.

In particular, when a trailer ball or a lever ball-clamping apparatus of the present invention is in use, a direction perpendicular to a road surface is generally considered to be a vertical direction. As far as it is concerned, in the description herein, orientation-related terms "upper", "lower", "top", and "bottom" are all relative to the vertical direction.

As shown in the figures, the present invention provides a lever ball-clamping apparatus with adjustable tightness, including a lever ball-clamping assembly. The lever ball-clamping assembly includes a housing 2 and a handle 1. An upper end of the housing 2 is provided with a top support plate 3 operatively connected to the handle 1, the housing 2 is fixedly provided with a ball-clamping support base 9 therein, the housing 2 is provided with a ball-clamping press seat 8 therein above the ball-clamping support base 9 in a liftable manner, and the ball-clamping press seat 8 is connected to the handle 1 via a linkage assembly, so as to enable the ball-clamping press seat 8 to rise or fall relative to the ball-clamping support base 9 by operating the handle. According to the present invention, an open socket 22 for lateral insertion mounting of a trailer ball 10 is arranged on one lateral side of the housing 2 and the ball-clamping support base 9, to enable a ball head of the trailer ball to be accommodated between the ball-clamping press seat and the ball-clamping support base. The linkage assembly includes a lever pressing body 4, a threaded adjustment piece 6, and a ball-clamping link rod 7. Two ends of the ball-clamping link rod 7 are respectively pivotably connected to an upper end of the ball-clamping press seat 8 and a lower end of the lever pressing body 4. The lever pressing body 4 is rotatably mounted on the top support plate 3 through a first bolt 11 at an upper end thereof. The threaded adjustment piece 6 is capable of adjusting a position of the first bolt 11 in a lifting direction of the ball-clamping press seat 8 so that the first bolt 11 is pulled close to or away from a top wall of the lever pressing body 4. The lever pressing body 4 is connected to the handle 1 to enable the handle 1 to operate the lever pressing body 4 to rotate around the first bolt 11.

Accordingly, when the handle is lifted to drive the lever pressing body to rotate, the ball-clamping press seat may be driven to rise through the ball-clamping link rod. When the handle is pressed down to drive the lever pressing body to rotate, the ball-clamping press seat may be driven to fall through the ball-clamping link rod. The corresponding operating principle will be further explained in detail below.

According to the present invention, preferably, the lever pressing body 4 has two side walls extending downwards from the top wall thereof, the two side walls are provided with opposite oblong holes 12, the threaded adjustment piece 6 is mounted between the two side walls of the lever pressing body 4 through the first bolt 11 inserted into the oblong holes 12 and, with a screw rod at an upper end thereof, slidably passes through the top wall of the lever pressing body 4, the screw rod is screwed connected with an adjusting nut 17 on a section thereof protruding upwards from the top wall, and the adjusting nut is directly or indirectly pressed against an upper surface of the top wall of the lever pressing body 4.

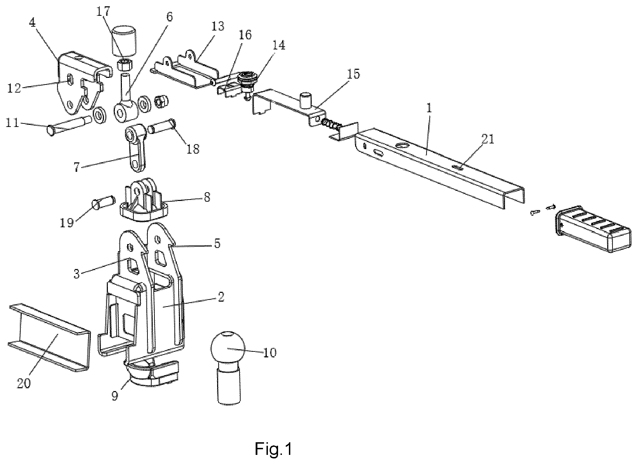

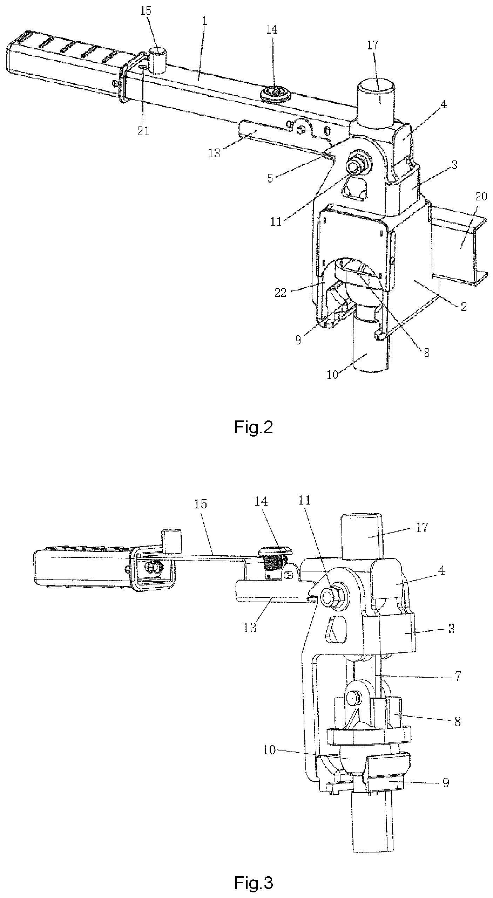

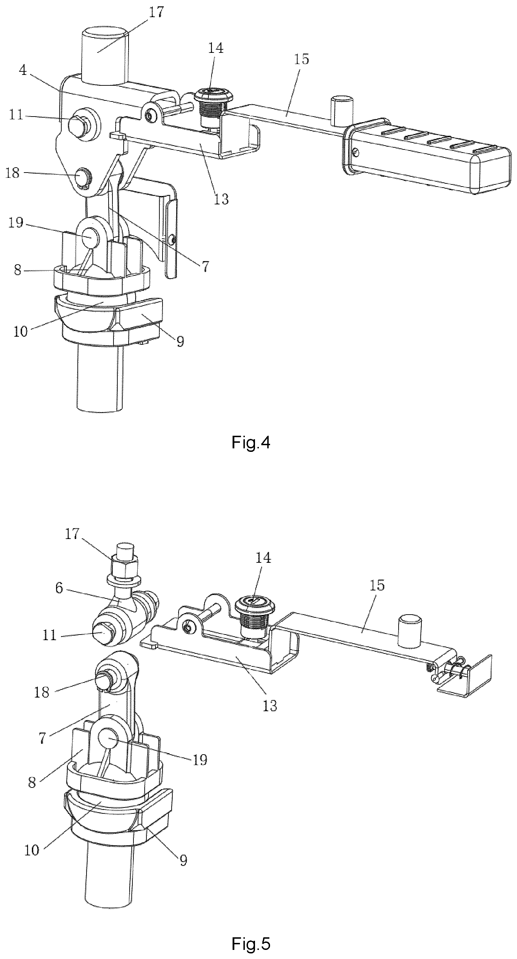

Referring to Fig.1 to Fig.8, the present invention provides the following technical solution:
a lever ball-clamping apparatus with adjustable tightness, including a lever ball-clamping assembly, the lever ball-clamping assembly including a housing 2 and a handle 1, an upper end of the housing 2 being provided with a top support plate 3, the housing 2 being fixedly provided with a ball-clamping support base 9 therein, the upper end of the housing 2 being mounted with a ball-clamping press seat 8 in a liftable manner, the ball-clamping press seat 8 being connected to the handle 1 via a linkage assembly, and an open socket 22 accommodating lateral insertion mounting of a trailer ball 10 is arranged on one lateral side of the housing 2 and the ball-clamping support base 9.

Through the arrangement of the open socket 22, when the ball-clamping press seat 8 rises, the trailer ball 10 can be laterally inserted and mounted in the housing 2 along the open socket 22, and at the same time, a lower end of the ball head of the trailer ball 10 is pressed onto the ball-clamping support base 9.

The linkage assembly includes a lever pressing body 4, a threaded adjustment piece 6, and a ball-clamping link rod 7. Two ends of the ball-clamping link rod 7 are respectively pivotably connected to the ball-clamping press seat 8 and the lever pressing body 4. The lever pressing body 4 is provided with an oblong hole 12. The threaded adjustment piece 6 is mounted in an inner cavity of the lever pressing body 4 through a first bolt 11 inserted in the oblong hole 12. The lever pressing body 4 is rotatably mounted on a top support plate 3 through the first bolt 11. An upper end of the threaded adjustment piece 6 is provided with a screw rod sliding through an upper end of the lever pressing body 4. The screw rod is provided with an adjusting nut 17 pressed on an outer wall of the upper end of the lever pressing body 4. The other side of the lever pressing body 4 is connected to the handle 1.

The first bolt 11 is arranged to realize rotational mounting of the lever pressing body 4, and then the handle 1 can be used to drive the lever pressing body 4 to rotate along the first bolt 11 to achieve adjustment of tightening or loosening. By arranging the oblong hole 12 to cooperate with the threaded adjustment piece 6 and by means of rotation of the adjusting nut 17, a height of the threaded adjustment piece 6 can be adjusted. During the adjustment, due to compressing action of the adjusting nut 17, the lever pressing body 4 can be driven to rise and fall on the oblong hole 12, so that a relative position of the lever pressing body 4 and the threaded adjustment piece 6 changes, thereby achieving a purpose of adjusting a stroke length of the ball-clamping press seat 8 and adjusting a tightness level of the clamped trailer ball 10, which is suitable for the problem of loosening of clamping of the trailer ball caused by a change in a size due to wear and tolerance.

An operating principle is as follows. First, the adjusting nut 17 is rotated according to the size of the trailer ball 10, and the lever pressing body 4 is driven to rise or fall by the compressing action of the adjusting nut 17, so that the relative position of the lever pressing body 4 and the threaded adjustment piece 6 changes, thereby achieving the purpose of adjusting the stroke length of the ball-clamping press seat 8.

Then, the handle 1 is lifted, driving the lever pressing body 4 to rotate along the first bolt 11, so that the ball-clamping link rod 7 connected to the lower end of the lever pressing body 4 rotates and rises, driving the ball-clamping press seat 8 to slide upwards to expand a cavity between the ball-clamping press seat 8 and the ball-clamping support base 9, and causing the trailer ball 10 to be laterally inserted and mounted in the housing 2 along the open socket 22. At the same time, the lower end of the ball head of the trailer ball 10 is pressed on the ball-clamping support base 9, and as the handle 1 is pressed down, the lever pressing body 4 rotates in an opposite direction, so that the ball-clamping press seat 8 is pushed to move downwards, and the ball-clamping press seat 8 and the ball-clamping support base 9 clamp the trailer ball 10 up and down.

Further, on this basis, upper and lower ends of the ball-clamping link rod 7 are respectively provided with a second bolt 18 and a third bolt 19, the upper end of the ball-clamping link rod 7 is pivotably connected to the lower end of the lever pressing body 4 through the second bolt 18, the lower end of the ball-clamping link rod 7 is pivotably connected to the upper end of the ball-clamping press seat 8 through the third bolt 19. A side of the housing 2 away from the open socket 22 is provided with a connecting frame 20 fitting a vehicle frame.

In order to realize smooth transmission of the linkage assembly, the second bolt 18, the third bolt 19, and the ball-clamping link rod 7 are arranged in an operatively connected manner to achieve a purpose of integrated transmission. The connection with the vehicle frame is realized by arranging the connecting frame 20.

Further, on this basis, a blocking latch 13 is slidably mounted at a lower end of a side of the handle 1 close to the lever pressing body 4, and an outer wall of the top support plate 3 is provided with a blocking recess 5 capable of insertion fitting with the blocking latch 13, so as to lock the handle 1 against relative rotation with respect to the top support plate 3 and the housing 2 in at least one direction.

Through the fitting between the slidable blocking latch 13 and the blocking recess 5, after being pressed down and fixed, the blocking latch 13 is slid to be inserted into the blocking recess 5, so as to realize limited mounting between the handle 1 and the top support plate 3, thereby preventing disengagement of the clamping due to unexpected rotation of the handle 1, realizing fixed limiting of the handle 1, and then maintaining a fastened clamping state.

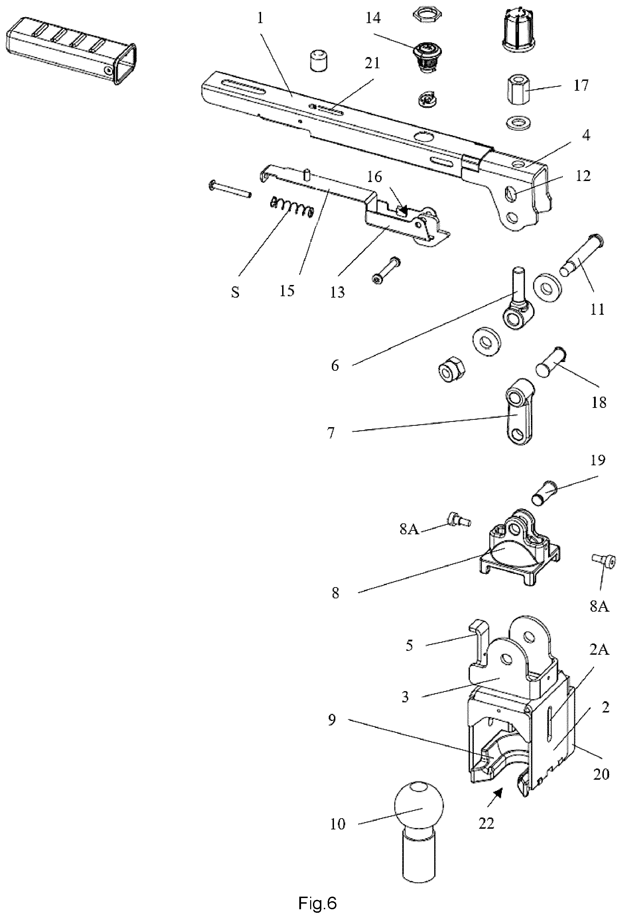

Furthermore, on this basis, one side of the blocking latch 13 is fixedly connected with (the embodiment as shown in Fig.1) or integrally formed with (the embodiment as shown in Fig.6) a pull plate 15, the pull plate 15 is slidably mounted on the handle 1, the handle 1 is provided with an elongated adjustment slot 21 fitting the sliding of the blocking latch 13 and the pull plate, an upper end of the blocking latch 13 and/or the pull plate 15 is provided with a lock catch 16, and the handle 1 is provided with a locking assembly 14 capable of fitting the lock catch 16, so as to lock the pull plate 15 and the blocking latch 13 against sliding along a longitudinal direction of the handle, thereby positioning the two. As required, locking fitting between the locking assembly 14 and the lock catch 16 is releasable as desired, preferably realized by an active manual operation of a user.

Advantageously, as shown in the figures, a spring (marked as "S" in Fig.6) acting between the handle 1 and the blocking latch 13 or the pull plate 15, in particular a compression spring, may alternatively be provided. Then, the fitting insertion between the blocking latch 13 and the blocking recess 5 may remain supported by a preload force of the spring, thereby achieving continuous, stable, and reliable locking of the two to prevent accidental loosening.

In order to prevent lateral sliding and falling off of the blocking latch 13 due to vibration or other reasons, the locking assembly 14 and the lock catch 16 fitting each other are further designed on the handle, achieving a fixed and convenient switching operation of locking and opening the blocking latch 13.

It is particularly advantageous and preferred that a guiding mechanism configured to guide the ball-clamping press seat 8 to move upwards or downwards is provided between the ball-clamping press seat 8 and the housing 2.

The guiding mechanism may include a first guide structure arranged on an inner side of the housing 2 and a second guide structure arranged on an outer side of the ball-clamping press seat 8, and the first guide structure is in sliding fit with the second guide structure. The first guide structure and the second guide structure may be configured as guide surfaces, guide grooves, or guide ribs. In this regard, please refer to the embodiments shown in Fig.1 to Fig.5.

Alternatively, the guiding mechanism may include a guide groove 2A arranged in a wall body of the housing 2 and a guide pin 8A arranged on the ball-clamping press seat 8, and the guide pin is capable of sliding freely along the guide groove. The guide groove may be configured as a slit slot provided in the wall body of the housing 2, and the guide pin may be configured as a bolt mounted on the ball-clamping press seat 8 and protruding into the slit slot. During the assembling, the bolt may pass through the slit slot in the wall body of the housing 2 from the outside and be inserted or screwed into a corresponding fitting hole or threaded hole in the ball-clamping press seat 8. In this regard, please refer to the embodiments shown in Fig.6 to Fig.8.

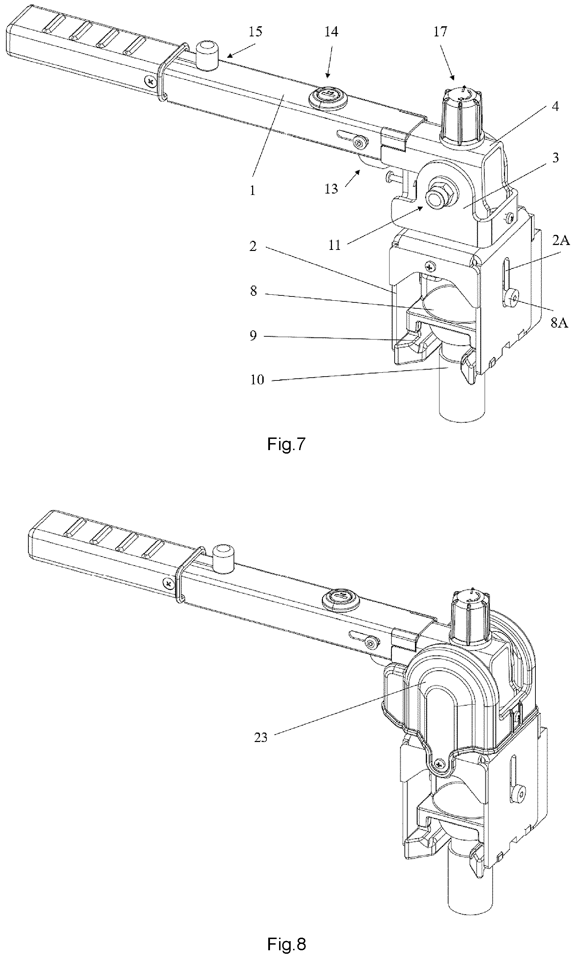

In addition, referring to Fig.8, for aesthetic and/or protective purposes, a cover shell 23 preferably made of plastic may be provided outside the top support plate 3. In this way, it also makes possible that debris or dirt can be prevented to a certain extent from entering the lever ball-clamping assembly and thereby affecting the operating accuracy and functionality of the transmission or linkage components thereof.

## Claims

1. A lever ball-clamping apparatus with adjustable tightness, comprising a lever ball-clamping assembly, the lever ball-clamping assembly comprising a housing (2) and a handle (1), an upper end of the housing (2) being provided with a top support plate (3) operatively connected to the handle (1), the housing (2) being fixedly provided with a ball-clamping support base (9) therein, the housing (2) being provided with a ball-clamping press seat (8) therein above the ball-clamping support base (9) in a liftable manner, and the ball-clamping press seat (8) being connected to the handle (1) via a linkage assembly, so as to enable the ball-clamping press seat (8) to rise or fall relative to the ball-clamping support base (9) by operating the handle;
wherein an open socket (22) for lateral insertion mounting of a trailer ball (10) is arranged on one lateral side of the housing (2) and the ball-clamping support base (9), to enable a ball head of the trailer ball to be accommodated between the ball-clamping press seat and the ball-clamping support base; and that the linkage assembly comprises a lever pressing body (4), 'a threaded adjustment piece (6), and a ball-clamping link rod (7), two ends of the ball-clamping link rod (7) being respectively pivotably connected to an upper end of the ball-clamping press seat (8) and a lower end of the lever pressing body (4), the lever pressing body (4) being rotatably mounted on the top support plate (3) through a first bolt (11) at an upper end thereof,
**characterized in that** the threaded adjustment piece (6) being capable of adjusting a position of the first bolt (11) in a lifting direction of the ball-clamping press seat (8) so that the first bolt (11) is pulled close to or away from a top wall of the lever pressing body (4), and the lever pressing body (4) being connected to the handle (1) to enable the handle (1) to operate the lever pressing body (4) to rotate around the first bolt (11).

2. The lever ball-clamping apparatus with adjustable tightness according to claim 1, **characterized in that** the lever pressing body (4) has two side walls extending downwards from the top wall thereof, the two side walls being provided with opposite oblong holes (12), and the threaded adjustment piece (6) is mounted between the two side walls of the lever pressing body (4) through the first bolt (11) inserted into the oblong holes (12) and, with a screw rod at an upper end thereof, slidably passes through the top wall of the lever pressing body (4), the screw rod being screwed connected with an adjusting nut (17) on a section thereof protruding upwards from the top wall, and the adjusting nut being directly or indirectly pressed against an upper surface of the top wall of the lever pressing body (4).

3. The lever ball-clamping apparatus with adjustable tightness according to claim 1 or 2, **characterized in that** an upper end of the ball-clamping link rod (7) is pivotably connected to the lower end of the lever pressing body (4) through a second bolt (18), and a lower end of the ball-clamping link rod (7) is pivotably connected to the upper end of the ball-clamping press seat (8) through a third bolt (19).

4. The lever ball-clamping apparatus with adjustable tightness according to any one of claims 1 to 3, **characterized in that** a guiding mechanism configured to guide the ball-clamping press seat (8) to move upwards or downwards is arranged between the ball-clamping press seat (8) and the housing (2).

5. The lever ball-clamping apparatus with adjustable tightness according to claim 4, **characterized in that** the guiding mechanism comprises a first guide structure arranged on an inner side of the housing (2) and a second guide structure arranged on an outer side of the ball-clamping press seat (8), the first guide structure being in sliding fit with the second guide structure.

6. The lever ball-clamping apparatus with adjustable tightness according to claim 5, **characterized in that** the first guide structure and the second guide structure are configured as guide surfaces, guide grooves, or guide ribs.

7. The lever ball-clamping apparatus with adjustable tightness according to claim 4, **characterized in that** the guiding mechanism comprises a guide groove arranged in a wall body of the housing (2) and a guide pin arranged on the ball-clamping press seat (8), the guide pin being capable of sliding freely along the guide groove.

8. The lever ball-clamping apparatus with adjustable tightness according to claim 7, **characterized in that** the guide groove is a slit slot provided in the wall body of the housing (2), and the guide pin is a bolt mounted on the ball-clamping press seat (8) and protruding into the slit slot.

9. The lever ball-clamping apparatus with adjustable tightness according to any one of claims 1 to 8, **characterized in that** a side of the housing (2) away from the open socket (22) is provided with a connecting frame (20) fitting a vehicle frame.

10. The lever ball-clamping apparatus with adjustable tightness according to any one of claims 1 to 9, **characterized in that** a blocking latch (13) slidably displacing along a longitudinal direction of the handle is mounted on a lower end of a side of the handle (1) close to the lever pressing body (4), and an outer wall of the top support plate (3) is provided with a blocking recess (5) capable of insertion fitting with the blocking latch (13).

11. The lever ball-clamping apparatus with adjustable tightness according to claim 10, **characterized in that** the blocking latch (13) is fixedly connected with or integrally formed with a pull plate (15) at one end thereof away from the top support plate (3), the pull plate (15) being slidably mounted on the handle (1), and the handle (1) is provided with an elongated adjustment slot (21) fitting sliding of the blocking latch (13) together with the pull plate (15).

12. The lever ball-clamping apparatus with adjustable tightness according to claim 11, **characterized in that** a spring acting between the handle (1) and the blocking latch (13) or the pull plate (15) is provided, and the insertion fitting between the blocking latch (13) and the blocking recess (5) remains supported by a preload force of the spring.

13. The lever ball-clamping apparatus with adjustable tightness according to claim 11 or 12, **characterized in that** an upper side of the blocking latch (13) or the pull plate (15) is provided with a lock catch (16), and the handle (1) is provided with a locking assembly (14) capable of fitting the lock catch (16).

## Patentansprüche

1. Hebel-Kugel-Spannvorrichtung mit einstellbarer Klemmung, umfassend eine Hebel-Kugel-Spannbaugruppe, wobei die Hebel-Kugel-Spannbaugruppe ein Gehäuse (2) und einen Griff (1) umfasst, wobei ein oberes Ende des Gehäuses (2) mit einer oberen Stützplatte (3) versehen ist, die in Wirkungsverbindung mit dem Griff (1) steht, wobei in dem Gehäuse (2) ein Spannkugel-Stützsockel (9) fest angeordnet ist, wobei in dem Gehäuse (2) oberhalb des Spannkugel-Stützsockels (9) ein Spannkugel-Presssitz (8) auf eine anhebbare Weise angeordnet ist, und wobei der Spannkugel-Presssitz (8) über eine Gestängeanordnung mit dem Griff (1) verbunden ist, um zu ermöglichen, dass der Spannkugel-Presssitz (8) durch Betätigen des Griffs relativ zu dem Spannkugel-Stützsockel (9) angehoben oder abgesenkt wird;
wobei an einer lateralen Seite des Gehäuses (2) und des Spannkugel-Stützsockels (9) eine offene Aufnahme (22) zum seitlichen Einsetzen und Montieren eines Anhängerkugels (10) angeordnet ist, um zu ermöglichen, dass ein Kugelkopf des Anhängerkugels zwischen dem Spannkugel-Presssitz und dem Spannkugel-Stützsockel aufgenommen wird; und wobei die Gestängeanordnung einen Hebelpresskörper (4), ein Gewindeeinstellstück (6) und eine Spannkugel-Verbindungsstange (7) umfasst, wobei zwei Enden der Spannkugel-Verbindungsstange (7) jeweils schwenkbar mit einem oberen Ende des Spannkugel-Presssitzes (8) und einem unteren Ende des Hebelpresskörpers (4) verbunden sind, wobei der Hebelpresskörper (4) durch einen ersten Bolzen (11) drehbar an der oberen Stützplatte (3) an ihrem oberen Ende montiert ist,
**dadurch gekennzeichnet,**
**dass** das Gewindeeinstellstück (6) eine Position des ersten Bolzens (11) in einer Hebungsrichtung des Spannkugel-Presssitzes (8) derart einstellen kann, dass der erste Bolzen (11) näher an eine obere Wand des Hebelpresskörpers (4) oder von dieser weg gezogen wird, und der Hebelpresskörper (4) mit dem Griff (1) verbunden ist, um zu ermöglichen, dass der Griff (1) den Hebelpresskörper (4) betätigt, um sich um den ersten Bolzen (11) zu drehen.

2. Hebel-Kugel-Spannvorrichtung mit einstellbarer Klemmung nach Anspruch 1, **dadurch gekennzeichnet, dass** der Hebelpresskörper (4) zwei Seitenwände aufweist, die sich von seiner oberen Wand nach unten erstrecken, wobei die zwei Seitenwände mit gegenüberliegenden Langlöchern (12) versehen sind, das Gewindeeinstellstück (6) zwischen den zwei Seitenwänden des Hebelpresskörpers (4) durch den in die Langlöcher (12) eingesetzten ersten Bolzen (11) montiert ist und mit einem Schraubenschaft an seinem oberen Ende gleitend durch die obere Wand des Hebelpresskörpers (4) hindurchtritt, wobei der Schraubenschaft an einem Abschnitt, der von der oberen Wand nach oben vorsteht, mit einer Einstellmutter (17) verschraubt ist, und die Einstellmutter direkt oder indirekt gegen eine obere Fläche der oberen Wand des Hebelpresskörpers (4) drückt.

3. Hebel-Kugel-Spannvorrichtung mit einstellbarer Klemmung nach Anspruch 1 oder 2, **dadurch gekennzeichnet, dass** ein oberes Ende der Spannkugel-Verbindungsstange (7) durch einen zweiten Bolzen (18) schwenkbar mit dem unteren Ende des Hebelpresskörpers (4) verbunden ist, und ein unteres Ende der Spannkugel-Verbindungsstange (7) durch einen dritten Bolzen (19) schwenkbar mit dem oberen Ende des Spannkugel-Presssitzes (8) verbunden ist.

4. Hebel-Kugel-Spannvorrichtung mit einstellbarer Klemmung nach einem der Ansprüche 1 bis 3, **dadurch gekennzeichnet, dass** zwischen dem Spannkugel-Presssitz (8) und dem Gehäuse (2) ein Führungsmechanismus angeordnet ist, der dazu ausgebildet ist, den Spannkugel-Presssitz (8) zu führen, um sich nach oben oder unten zu bewegen.

5. Hebel-Kugel-Spannvorrichtung mit einstellbarer Klemmung nach Anspruch 4, **dadurch gekennzeichnet, dass** der Führungsmechanismus eine erste Führungsstruktur, die an einer Innenseite des Gehäuses (2) angeordnet ist, und eine zweite Führungsstruktur, die an einer Außenseite des Spannkugel-Presssitzes (8) angeordnet ist, umfasst, wobei die erste Führungsstruktur mit der zweiten Führungsstruktur in gleitender Passung steht.

6. Hebel-Kugel-Spannvorrichtung mit einstellbarer Klemmung nach Anspruch 5, **dadurch gekennzeichnet, dass** die erste Führungsstruktur und die zweite Führungsstruktur als Führungsflächen, Führungsnuten oder Führungsrippen ausgebildet sind.

7. Hebel-Kugel-Spannvorrichtung mit einstellbarer Klemmung nach Anspruch 4, **dadurch gekennzeichnet, dass** der Führungsmechanismus eine in einem Wandkörper des Gehäuses (2) angeordnete Führungsnut und einen an dem Spannkugel-Presssitz (8) angeordneten Führungsstift umfasst, wobei der Führungsstift entlang der Führungsnut frei gleiten kann.

8. Hebel-Kugel-Spannvorrichtung mit einstellbarer Klemmung nach Anspruch 7, **dadurch gekennzeichnet, dass** die Führungsnut ein in dem Wandkörper des Gehäuses (2) vorgesehener Schlitz ist und der Führungsstift ein Bolzen ist, der an dem Spannkugel-Presssitz (8) montiert ist und in den Schlitz hineinragt.

9. Hebel-Kugel-Spannvorrichtung mit einstellbarer Klemmung nach einem der Ansprüche 1 bis 8, **dadurch gekennzeichnet, dass** eine von der offenen Aufnahme (22) abgewandte Seite des Gehäuses (2) mit einem an einen Fahrzeugrahmen anpassbaren Verbindungsrahmen (20) versehen ist.

10. Hebel-Kugel-Spannvorrichtung mit einstellbarer Klemmung nach einem der Ansprüche 1 bis 9, **dadurch gekennzeichnet, dass** an einem unteren Ende einer Seite des Griffs (1), die dem Hebelpresskörper (4) nahe ist, ein Sperrriegel (13) montiert ist, der entlang einer Längsrichtung des Griffs verschiebbar ist, und eine Außenwand der oberen Stützplatte (3) mit einer Sperrvertiefung (5) versehen ist, die mit dem Sperrriegel (13) in einsetzendem Eingriff bringbar ist.

11. Hebel-Kugel-Spannvorrichtung mit einstellbarer Klemmung nach Anspruch 10, **dadurch gekennzeichnet, dass** der Sperrriegel (13) an seinem von der oberen Stützplatte (3) abgewandten Ende fest mit einer Zugplatte (15) verbunden oder einstückig mit dieser ausgebildet ist, wobei die Zugplatte (15) verschiebbar an dem Griff (1) montiert ist, und der Griff (1) mit einem länglichen Einstellschlitz (21) versehen ist, der zum Verschieben des Sperrriegels (13) zusammen mit der Zugplatte (15) dient.

12. Hebel-Kugel-Spannvorrichtung mit einstellbarer Klemmung nach Anspruch 11, **dadurch gekennzeichnet, dass** eine zwischen dem Griff (1) und dem Sperrriegel (13) oder der Zugplatte (15) wirkende Feder vorgesehen ist und der einsetzende Eingriff zwischen dem Sperrriegel (13) und der Sperrvertiefung (5) durch eine Vorspannkraft der Feder aufrechterhalten bleibt.

13. Hebel-Kugel-Spannvorrichtung mit einstellbarer Klemmung nach Anspruch 11 oder 12, **dadurch gekennzeichnet, dass** eine Oberseite des Sperrriegels (13) oder der Zugplatte (15) mit einer Sperrraste (16) versehen ist und der Griff (1) mit einer Sperrbaugruppe (14) versehen ist, die mit der Sperrraste (16) zusammenwirken kann.

## Revendications

1. Un appareil à levier de serrage de rotule avec serrage réglable, comprenant un assemblage à levier de serrage de rotule, l'assemblage à levier de serrage de rotule comprenant un boîtier (2) et une poignée (1), une extrémité supérieure du boîtier (2) étant pourvue d'une plaque de support supérieure (3) reliée fonctionnellement à la poignée (1), le boîtier (2) étant fixement pourvu, à l'intérieur de celui-ci, d'un socle de serrage de rotule (9), le boîtier (2) étant pourvu, à l'intérieur de celui-ci, d'un siège de pression de serrage de rotule (8) au-dessus du socle de serrage de rotule (9) d'une manière pouvant être levée, et le siège de pression de serrage de rotule (8) étant relié à la poignée (1) par l'intermédiaire d'un assemblage de liaison, de manière à permettre au siège de pression de serrage de rotule (8) de monter ou de descendre par rapport au socle de serrage de rotule (9) par actionnement de la poignée ;
dans lequel une douille ouverte (22) destinée à un montage par insertion latérale d'une rotule d'attelage (10) est agencée sur un côté latéral du boîtier (2) et du socle de serrage de rotule (9), pour permettre à une tête de rotule de la rotule d'attelage d'être logée entre le siège de pression de serrage de rotule et le socle de serrage de rotule ; et dans lequel l'assemblage de liaison comprend un corps de pression à levier (4), une pièce de réglage filetée (6) et une bielle de serrage de rotule (7), deux extrémités de la bielle de serrage de rotule (7) étant respectivement reliées par pivotement à une extrémité supérieure du siège de pression de serrage de rotule (8) et à une extrémité inférieure du corps de pression à levier (4), le corps de pression à levier (4) étant monté rotatif sur la plaque de support supérieure (3) par l'intermédiaire d'un premier boulon (11) au niveau d'une extrémité supérieure de celui-ci,
**caractérisé en ce que** la pièce de réglage filetée (6) est apte à ajuster une position du premier boulon (11) dans une direction de levage du siège de pression de serrage de rotule (8), de sorte que le premier boulon (11) soit rapproché ou éloigné d'une paroi supérieure du corps de pression à levier (4), et **en ce que** le corps de pression à levier (4) est relié à la poignée (1) pour permettre à la poignée (1) d'actionner le corps de pression à levier (4) en rotation autour du premier boulon (11).

2. L'appareil à levier de serrage de rotule avec serrage réglable selon la revendication 1, **caractérisé en ce que** le corps de pression à levier (4) comporte deux parois latérales s'étendant vers le bas depuis la paroi supérieure de celui-ci, les deux parois latérales étant pourvues de trous oblongs opposés (12), et **en ce que** la pièce de réglage filetée (6) est montée entre les deux parois latérales du corps de pression à levier (4) par l'intermédiaire du premier boulon (11) inséré dans les trous oblongs (12) et, avec une tige filetée à une extrémité supérieure de celle-ci, traverse de manière coulissante la paroi supérieure du corps de pression à levier (4), la tige filetée étant reliée par vissage à un écrou de réglage (17) sur une partie de celle-ci faisant saillie vers le haut depuis la paroi supérieure, et l'écrou de réglage étant directement ou indirectement pressé contre une surface supérieure de la paroi supérieure du corps de pression à levier (4).

3. L'appareil à levier de serrage de rotule avec serrage réglable selon la revendication 1 ou 2, **caractérisé en ce qu'**une extrémité supérieure de la bielle de serrage de rotule (7) est reliée par pivotement à l'extrémité inférieure du corps de pression à levier (4) par l'intermédiaire d'un deuxième boulon (18), et une extrémité inférieure de la bielle de serrage de rotule (7) est reliée par pivotement à l'extrémité supérieure du siège de pression de serrage de rotule (8) par l'intermédiaire d'un troisième boulon (19).

4. L'appareil à levier de serrage de rotule avec serrage réglable selon l'une quelconque des revendications 1 à 3, **caractérisé en ce qu'**un mécanisme de guidage configuré pour guider le siège de pression de serrage de rotule (8) à se déplacer vers le haut ou vers le bas est agencé entre le siège de pression de serrage de rotule (8) et le boîtier (2).

5. L'appareil à levier de serrage de rotule avec serrage réglable selon la revendication 4, **caractérisé en ce que** le mécanisme de guidage comprend une première structure de guidage agencée sur un côté intérieur du boîtier (2) et une deuxième structure de guidage agencée sur un côté extérieur du siège de pression de serrage de rotule (8), la première structure de guidage étant en ajustement glissant avec la deuxième structure de guidage.

6. L'appareil à levier de serrage de rotule avec serrage réglable selon la revendication 5, **caractérisé en ce que** la première structure de guidage et la deuxième structure de guidage sont configurées comme surfaces de guidage, rainures de guidage, ou nervures de guidage.

7. L'appareil à levier de serrage de rotule avec serrage réglable selon la revendication 4, **caractérisé en ce que** le mécanisme de guidage comprend une rainure de guidage agencée dans un corps de paroi du boîtier (2) et un pion de guidage agencé sur le siège de pression de serrage de rotule (8), le pion de guidage étant apte à coulisser librement le long de la rainure de guidage.

8. L'appareil à levier de serrage de rotule avec serrage réglable selon la revendication 7, **caractérisé en ce que** la rainure de guidage est une fente allongée ménagée dans le corps de paroi du boîtier (2), et le pion de guidage est un boulon monté sur le siège de pression de serrage de rotule (8) et faisant saillie dans la fente allongée.

9. L'appareil à levier de serrage de rotule avec serrage réglable selon l'une quelconque des revendications 1 à 8, **caractérisé en ce qu'**un côté du boîtier (2) éloigné de la douille ouverte (22) est pourvu d'un cadre de connexion (20) s'adaptant à un châssis de véhicule.

10. L'appareil à levier de serrage de rotule avec serrage réglable selon l'une quelconque des revendications 1 à 9, **caractérisé en ce qu'**un verrou d'arrêt (13) se déplaçant par coulissement le long d'une direction longitudinale de la poignée est monté sur une extrémité inférieure d'un côté de la poignée (1) proche du corps de pression à levier (4), et une paroi extérieure de la plaque de support supérieure (3) est pourvue d'un renfoncement d'arrêt (5) apte à un emboîtement par insertion avec le verrou d'arrêt (13).

11. L'appareil à levier de serrage de rotule avec serrage réglable selon la revendication 10, **caractérisé en ce que** le verrou d'arrêt (13) est relié fixement à, ou formé d'un seul pièce avec, une plaque de tirage (15) à une extrémité de celui-ci opposée à la plaque de support supérieure (3), la plaque de tirage (15) étant montée coulissante sur la poignée (1), et la poignée (1) est pourvue d'une fente de réglage allongée (21) s'adaptant au coulissement du verrou d'arrêt (13) conjointement avec la plaque de tirage (15).

12. L'appareil à levier de serrage de rotule avec serrage réglable selon la revendication 11, **caractérisé en ce qu'**un ressort agissant entre la poignée (1) et le verrou d'arrêt (13) ou la plaque de tirage (15) est prévu, et l'emboîtement par insertion entre le verrou d'arrêt (13) et le renfoncement d'arrêt (5) reste supporté par une force de précharge du ressort.

13. L'appareil à levier de serrage de rotule avec serrage réglable selon la revendication 11 ou 12, **caractérisé en ce qu'**un côté supérieur du verrou d'arrêt (13) ou de la plaque de tirage (15) est pourvu d'un verrouillage (16), et la poignée (1) est pourvue d'un assemblage de blocage (14) apte à un emboîtement avec le verrouillage (16).
